# EUROPEAN PATENT APPLICATION

(11) **EP 4 745 960 A1**
(43) Date of publication of application: **20.05.2026**
(21) Application number: 25216438.9
(22) Date of filing: 17.11.2025
(51) Int. Cl.: G10L 17/00, G06F 21/32

(54) **CONTINUOUS MULTI-LAYER AUTHENTICATION MODEL AND SYSTEM**

(30) Priority: 16.11.2024 US 202418950068
(71) Applicant: Mitel Networks Corporation, Ottawa, Ontario K2K 3K1 (CA)
(72) Inventor: Brochonski, Michael, 82620265 Curitiba (BR); Braganza, Jonathan, Ottawa, K2E 6P2 (CA)
(74) Representative: McDougall, James

(57) **Abstract**

Systems and methods for filtering voice information based on context and/or language are provided. A method can include identifying speaker voice streams and forming individual voice streams with associated identifiers, converting audio information of the individual voice streams to text information with associated identifier information, determining a context of at least portions of the text information, and filtering the voice streams based on the context and/or language within segments of the voice streams.

## Description

### FIELD

This disclosure relates to virtual authentication systems. More particularly, the disclosure relates to methods and systems for real-time, context-specific authentication of virtual activities.

### BACKGROUND

Traditional authentication methods have relied on single-factor systems like passwords or PINs, later evolving to two-factor authentication (2FA) using SMS codes or authenticator apps. More advanced solutions incorporated biometric data such as fingerprints or facial recognition, primarily for device access. However, these methods are not immune to impersonation or deepfake attacks.

Some platforms implemented geolocation checks to verify user location, while others used knowledge-based authentication (KBA) with personal questions. Video verification has been used in some financial services, requiring users to record themselves speaking specific phrases. Social media integration for identity confirmation and blockchain-based identity solutions have also emerged as potential solutions.

Despite these advancements, most methods operate in isolation, lacking the comprehensive, multi-layered approach necessary to combat sophisticated fraud attempts. These methods struggle to provide real-time, context-aware verification that could adapt to different transaction types and risk levels and remain vulnerable to increasingly sophisticated impersonation techniques and deepfake technology.

Prior attempts to address these problems have fallen short. This disclosure resolves these and other problems of the art.

### BRIEF DESCRIPTION OF THE DRAWINGS

The subject matter of the present disclosure is particularly pointed out and distinctly claimed in the concluding portion of this specification. A more complete understanding of the present disclosure, however, may best be obtained by referring to the detailed description and claims when considered in connection with the drawing figures, wherein like numerals denote like elements and wherein:
FIG. 1 illustrates an Internet-connected distributed computer system.
FIG. 2 illustrates a block diagram of an authentication system that provides real-time, context-specific authentication of a user and/or a virtual operation, according to aspects of this disclosure.
FIG. 3 illustrates a flow diagram of an example implementation of a method that provides real-time, context-specific authentication of a user and/or a virtual operation, according to aspects of this disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### DETAILED DESCRIPTION

The following detailed description of various embodiments herein refers to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

The process flows and screenshots depicted are merely embodiments and, unless otherwise noted, are not intended to limit the scope of the disclosure. For example, the steps recited in any of the method or process descriptions may be executed in any order and are not limited to the order presented. It will be appreciated that the following description makes appropriate references not only to the steps and user interface elements, but also to the various system components as described herein. It should be understood that, although exemplary embodiments are illustrated in the figures and described herein, the principles of the present disclosure may be implemented using any number of techniques, whether currently known or not. The present disclosure should in no way be limited to the exemplary implementations and techniques illustrated in the drawings and described below. Unless otherwise specifically noted, articles depicted in the drawings are not necessarily drawn to scale.

Computer programs (also referred to as computer control logic) can be stored in main memory and/or secondary memory. Computer programs may also be received via communications interface. Such computer programs, when executed, enable the computer system to perform the features as discussed herein. **In** particular, the computer programs, when executed, enable the processor to perform the features of various embodiments. Accordingly, such computer programs represent controllers of the computer system.

These computer program instructions may be loaded onto a general-purpose computer, special purpose computer, or other programmable data processing apparatus to produce a machine, such that the instructions that execute on the computer or other programmable data processing apparatus create means for implementing the functions specified in the flowchart block or blocks. These computer program instructions may also be stored in a computer-readable memory that can direct a computer or other programmable data processing apparatus to function in a particular manner, such that the instructions stored in the computer-readable memory produce an article of manufacture including instruction means which implement the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions specified in the flowchart block or blocks.

**In** various embodiments, software may be stored in a computer program product and loaded into a computer system using a removable storage drive, hard disk drive, or communications interface. The control logic (software), when executed by the processor, causes the processor to perform the functions of various embodiments as described herein. In various embodiments, hardware components may take the form of application specific integrated circuits (ASICs). Implementation of the hardware so as to perform the functions described herein will be apparent to persons skilled in the relevant art(s).

As will be appreciated by one of ordinary skill in the art, the system disclosed herein may be embodied as a customization of an existing system, an add-on product, a processing apparatus executing upgraded software, a stand-alone system, a distributed system, a method, a data processing system, a device for data processing, and/or a computer program product. Accordingly, any portion of the system or a module may take the form of a processing apparatus executing code, an internet-based embodiment, an entirely hardware-based embodiment, or an embodiment combining aspects of the internet, software, and hardware. Furthermore, the system may take the form of a computer program product on a computer-readable storage medium having computer-readable program code means embodied in the storage medium. Any suitable computer-readable storage medium may be utilized, including hard disks, optical storage devices, magnetic storage devices, and/or the like.

The system and method may be described herein in terms of functional block components, screen shots, optional selections, and various processing steps. It should be appreciated that such functional blocks may be realized by any number of hardware and/or software components configured to perform the specified functions. For example, the system may employ various integrated circuit components, e.g., memory elements, processing elements, logic elements, look-up tables, and the like, which may carry out a variety of functions under the control of one or more microprocessors or other control devices. Similarly, the software elements of the system may be implemented with any programming or scripting language such as C, C++, C#, JAVA^{®}, JAVASCRIPT^{®}, JAVASCRIPT^{®} Object Notation (JSON), VBScript, Macromedia COLD FUSION, COBOL, MICROSOFT^{®} company's Active Server Pages, assembly, PERL^{®} , PHP, awk, PYTHON^{®}, Visual Basic, SQL Stored Procedures, PL/SQL, any UNIX^{®} shell script, and extensible markup language (XML) with the various algorithms being implemented with any combination of data structures, objects, processes, routines or other programming elements. Further, it should be noted that the system may employ any number of techniques for data transmission, signaling, data processing, network control, and the like. Still further, the system could be used to detect or prevent security issues with a client-side scripting language, such as JAVASCRIPT^{®}, VBScript, or the like.

For the sake of brevity, data networking, application development, and other functional aspects of the systems (and components of the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in a practical system.

As used herein the term "engine" refers to logic embodied in hardware or software instructions, which can be written in a programming language, such as C, C++, Objective-C, COBOL, JAVA^{™}, JAVASCRIPT^{®}, JAVASCRIPT^{®} Object Notation (JSON), PHP, Perl, HTML, CSS, JavaScript, Ruby, VBScript, ASPX, Microsoft .NET^{™} languages such as C#, and/or the like. An engine may be compiled into executable programs or written in interpreted programming languages. Software engines may be callable from other engines or from themselves. Engines described herein refer to one or more logical modules that can be merged with other engines or applications or can be divided into sub-engines. The engines can be stored in non-transitory computer-readable medium or computer storage device and be stored on and executed by one or more general purpose computers, thus creating a special purpose computer configured to provide the engine. **In** various aspects, an engine can include a large language model (LLM), among other components and/or functions.

According to various embodiments, the aspects of the present disclosure are implemented using a combination of both the hardware and the software. As used herein, the term "server" as described herein may include server hardware, server software, applications and/or services hosted by the server, and/or combinations thereof. The meeting system may also use one or more database systems communicatively coupled to the one or more servers for storing various data, such as, meeting data, participant data and/or the like.

The various system components discussed herein may include one or more of the following: a host server or other computing systems including a processor for processing digital data; a memory coupled to the processor for storing digital data; an input digitizer coupled to the processor for inputting digital data; an application program stored in the memory and accessible by the processor for directing processing of digital data by the processor; a display device coupled to the processor and memory for displaying information derived from digital data processed by the processor; and a plurality of databases. Various databases used herein may include user data, geographic data, and/or like data useful in the operation of the system. As those skilled in the art will appreciate, a computer may include an operating system (e.g., Windows NT, Windows 95/98/2000, Windows XP, Windows Vista, Windows 7, Windows 10, OS2, UNIX, Linux, Solaris, MacOS, etc.) as well as various conventional support software and drivers typically associated with computers.

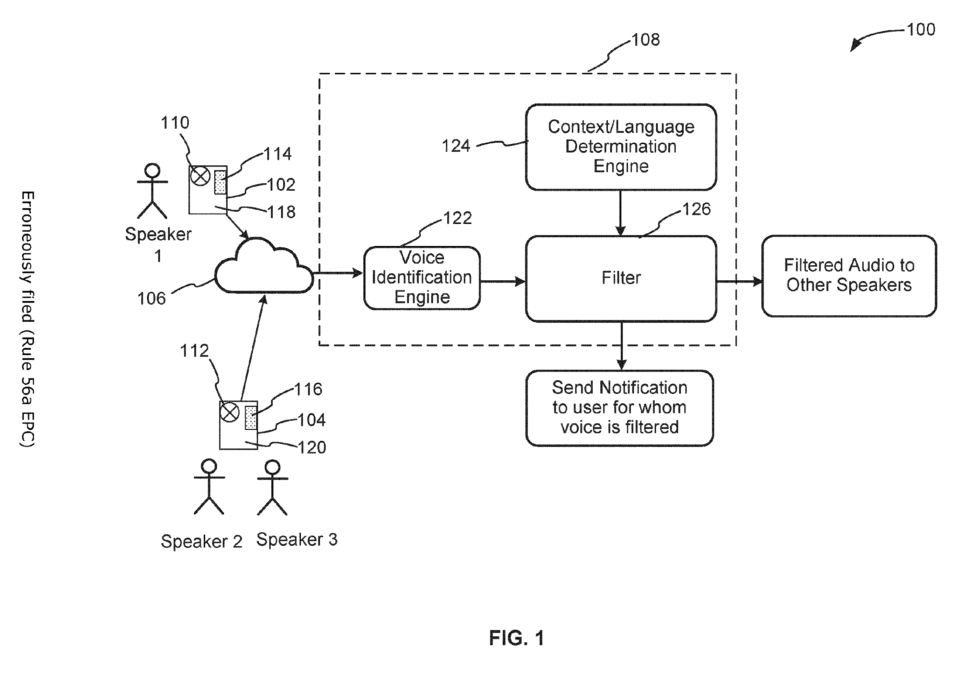

FIG. 1 shows an Internet-connected distributed computer system. As communications and networking technologies have evolved in capability and accessibility, and as the computational bandwidths, data-storage capacities, and other capabilities and capacities of various types of computer systems have steadily and rapidly increased, much of modern computing now generally involves large distributed systems and computers interconnected by local networks, wide-area networks, wireless communications, and the Internet. FIG. 1 shows a typical distributed system in which a plurality of PCs 102 and a remote server 104 are interconnected through various communications and networking systems that together comprise the Internet 106. In various embodiments, the remote server 104 is a high-end distributed mainframe system with a large data-storage system. In various embodiments, the remote server 104 is a large computer center with large numbers of rack-mounted server computers or blade servers. Such distributed computer systems provide diverse arrays of functionalities. For example, a PC user may access hundreds of millions of different web sites provided by hundreds of thousands of different web servers throughout the world and may access high-computational-bandwidth computing services from remote computer facilities for running complex computational tasks.

Online transactions, particularly in high-value or high-risk sectors like e-commerce, property rentals, and peer-to-peer marketplaces, are increasingly vulnerable to sophisticated fraud attempts. Current authentication methods often rely on single-factor or basic two-factor systems, which can be compromised through various means such as identity theft, impersonation, or the use of deepfakes.

Existing solutions fail to provide a comprehensive, real-time verification of both the user's identity, their physical presence at a claimed location and ownership over the transaction item. This gap in security leaves transactions open to manipulation, leading to financial losses, erosion of trust in online platforms, and reluctance among users to engage in high-value digital transactions.

A multi-layered authentication system addresses these shortcomings by combining biometric verification, real-time location tracking, and context-aware challenges. By integrating multiple data points that are difficult to falsify simultaneously, various aspects of this disclosure significantly raise the bar for fraudulent activities, enhancing trust and security in online transactions. This system could be particularly valuable in several contexts:
- High-value e-commerce: For luxury goods, collectibles, or expensive electronics, ensuring the authenticity of both buyer and seller.
- Real estate transactions: Verifying property owners and potential buyers/renters for both online listings and virtual tours.
- Peer-to-peer marketplaces: Enhancing trust in platforms facilitating direct user-to-user sales of valuable items like vehicles or antiques.
- Remote work verification: Ensuring employees are present at designated work locations when required.
- Remote voting systems: Ensuring voter identity and location authenticity during online elections.
- Secure remote education: Verifying student presence and identity during online exams or high-stakes assessments.
- Healthcare telemedicine: Authenticating patients for sensitive medical consultations or prescription renewals.
- Banking and financial services: Enhancing security for high-value transfers, loan applications, or account modifications.
- Government services: Securing access to sensitive documents or services like passport renewals or tax filings.
- Corporate data access: Protecting access to confidential company information for remote workers.

Systems, apparatus, and steps involved in multi-layered authentication are described below. The systems, apparatus, and steps are described with respect to user listing authentication and/or transaction authentication; however, it should be understood that these scenarios provide only a couple of scenarios out of various other scenarios for which the systems, apparatus, and steps can be used.

Aspects of the present disclosure can advantageously provide the following features:
- Multi-layered approach: Combines biometrics, real-time location, and context-aware challenges in a single system.
- Dynamic verification: Employs random, unpredictable challenges based on the user's environment and transaction context.
- Continuous authentication: Maintains security throughout the transaction process, not just at the initial login.
- Adaptive risk assessment: Adjusts verification requirements based on transaction value and risk level.
- Difficult to spoof: Requires simultaneous verification of multiple factors that are hard to fake together.
- Context-aware: Incorporates verification of the item or property being transacted, not just the user's identity.
- Real-time element integration: Uses current environmental data (e.g., nearby objects, recent activities) for verification.
- Reducing vulnerability to deepfakes and sophisticated impersonation techniques.

A user can log in to an account using biometric data (e.g., a fingerprint, facial recognition, etc.; something that's uniquely the user's). Then, as the user is about to perform a potentially risky activity (e.g., list an item for sale, propose a purchase, list a property rental, etc.), the system can cleverly present a context-specific challenge to the user, such as asking the user to take a selfie with the item they are selling or show a landmark near their location. The authentication system could even throw in a surprise authentication verification about something the user just did (e.g., "Please hold the pen in the table that appears in the living room table with the front camera open). These challenges change every time, making it difficult for fraudsters to fake, even with advanced impersonation techniques or deepfake technology.

By checking the user's identity, location, and surroundings all at once, and doing it throughout the transaction, an authentication system can create a multiple security check that's tough to break. The authentication system can outsmart deepfakes by requiring real-time, context-specific responses that can't be pre-recorded or easily manipulated.

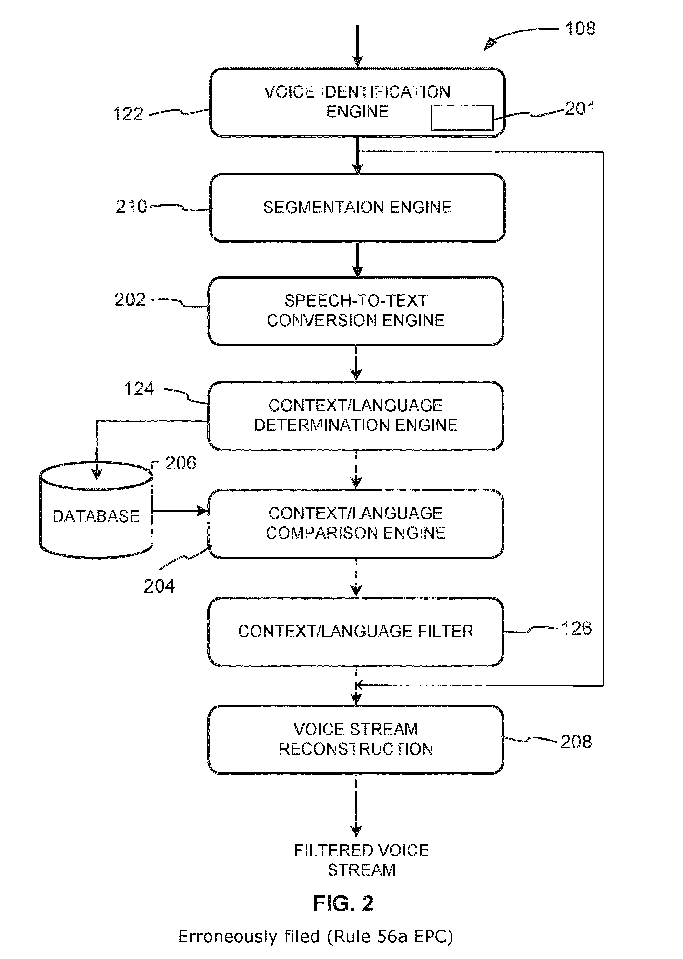

FIG. 2 is a block diagram or general architecture of an authentication system 200 for real-time authentication of a user, in accordance with various embodiments. The control logic of the authentication system 200 can be implemented by a server (e.g., see remote server 104 of FIG. 2), a host computer (e.g., see PCs 102 of FIG. 2), or any other suitable processor or processors in electronic communication with the distributed computer system. The authentication system 200 can include a data processing layer 202 configured to receive data from a user interface layer 204.

The user interface layer 204 can include a biometric input module whereby a user can input biometric data (e.g., fingerprint, facial recognition, or other biometric data). The user interface layer 204 can include the user biometric data. The data processing layer 202 can include a biometric verification engine configured to verify the biometric data received from the user interface layer 204. For example, the data processing layer 202 can compare the biometric data received from the user interface layer 204 with baseline biometric data saved in memory, such as data storage 206 for example, to confirm that the biometric data received from the user interface layer 204 belongs to the user. The baseline biometric data can include biometric data received from the user at a previous time (e.g., when the user initially set up an account with the authentication system 200).

The user interface layer 204 can include a camera interface whereby a user can input a picture or video captured by the user's camera. The user interface layer 204 can include the image data. The data processing layer 202 can include a content analysis engine configured to verify the image data received from the user interface layer 204. For example, the data processing layer 202 can analyze the image data to determine what items (e.g., people, objects, buildings, locations, landmarks, etc.) are included in the image data.

The user interface layer 204 can include a GPS module whereby the data processing layer 202 can receive a geographic location of the user. The user interface layer 204 can include the geographic location data. The data processing layer 202 can include a location verification module configured to verify the geographic location data received from the user interface layer 204. For example, the data processing layer 202 can analyze the geographic location data to verify its authenticity. The data processing layer 202 can analyze the geographic location data to determine and/or verify a location of the user. The data processing layer 202 can use publicly available images (e.g., Google^{®} street view, etc.) to verify the location of the user.

The user interface layer 204 can include a challenge display whereby the user can input an answer to the displayed challenge (e.g., via a user input device such as a mouse, a keyboard, a touch screen, a stylus, etc.). The user interface layer 204 can include the user input data received from the user in response to the challenge. The data processing layer 202 can include a risk assessment module configured to assess a level of risk of a transaction based upon the user data received from the user interface layer 204.

The authentication system 200 can further include a core engine 208 (also referred to as an artificial intelligence (AI) core). The core engine 208 can be in communication with the data processing layer 202. The core engine 208 can receive data from the data processing layer 202 to help perform various functions of the data processing layer 202 or other modules of the authentication system 200.

The core engine 208 can include a dynamic challenge generator configured to generate challenges based upon uploaded content received from the user. For example, the core engine 208 can generate context-specific challenges based on an image received from a user.

The core engine 208 can include a multi-modal AI model configured to generate unique, context-specific challenges based on uploaded content received from the user. For example, the core engine 208 can generate context-specific challenges using features detected in an image received from a user. The dynamic challenge generator and the multi-modal Al model can communicate with one another to generate the context-specific challenges. In various embodiments, the dynamic challenge generator utilizes the multi-modal AI model to generate the context-specific challenge. The multi-modal AI model can be a transformer model. The multi-modal AI model can take into account various modes such as audio, video, images, and text). An example multi-modal AI model is Phi-3 Vision by Microsoft^{®}. An image and instructions for evaluating the image can be provided as input to the multi-modal AI model for evaluating the image. Inputs to the multi-modal AI model can include text, images, location data, and assessed risk.

The core engine 208 can include a response analysis engine configured to analyze a response received from the user in response to a context-specific challenge presented to the user by the authentication system 200. In this regard, the core engine 208 can verify an image received from the user to determine that the image properly satisfies the challenge.

The core engine 208 can include a continuous trust score calculator configured to generate a trust score for the user. The continuous trust score calculator can update the user's trust score based on input received from the user and save the user's trust score in a user profile database (e.g., the data storage 206). The trust score can rank a trustworthiness of the user. For example, a history of trustworthy and authentic actions on an application or website (e.g., selling of legitimate items, etc.) can result in a high trust score. In contrast, a history of fraudulent and deceitful actions on an application or website (e.g., fraud, failing to ship sold items, late shipment of sold items, failing to pay, etc.) can result in a low trust score.

The authentication system 200 can further include a security layer 210. The security layer 210 can be in communication with the core engine 208. The security layer 210 can receive information from the core engine 208.

The security layer 210 can include a real-time verification module configured to verify user data and/or other digital data such as pictures, login credentials, biometric data, geographic location data (e.g., GPS coordinates), etc. For example, the security layer 210 can analyze metadata of an image sent from a user to verify various data such as geographic location and the date the image was taken. The security layer 210 can include a metadata validator configured to validate metadata of audio-visual content. The security layer 210 can analyze metadata to ensure responses to context-specific challenges were generated in real-time and at the correct location. For example, responses can be time gated after the user prompts its start. The user can be required to re-do the challenge if it times out. The authentication system 200 can output for display to a user an authentication confirmation based on the verification performed by the security layer 210.

In various embodiments, the authentication system 200 can perform reverse image lookup on images provided by a user. In response to the authentication system 200 determining that a user-provided image is a stock photo or is otherwise a known photo or a copy of a known photo, the authentication system 200 can deny the request and/or request that the user provide additional images.

The security layer 210 can include deepfake detection protection configured to provide deepfake detection and/or forensic analysis. The security layer 210 can be configured to detect deepfake content (e.g., audio-visual content such as audio, video, images, or documents). In this regard, the security layer 210 can verify the integrity of the received audio-visual content. The security layer 210 can verify the integrity of audio-visual content by analyzing metadata, watermarks, data in the blockchain, or any other suitable method.

The authentication system 200 can further include an output layer 212. In response to all verifications passing successfully, the action can be approved. Example actions include approving a user's listing or authorizing a transaction. The output layer 212 can include an authentication token generator configured to provide a secure token confirming the user's authenticated status. In the case of a user's listing (e.g., for the sale of an item), the verified audio-visual content and listing can then be cleared for use in the public listing. In the case of a transaction, the transaction can then be authorized. The authentication token can be used for future edits of the user's listing.

Throughout the listing creation or transaction process, the authentication system 200 may request additional, randomized verifications. These could include sudden requests for the user to show different angles of the item/property or interact with it in specific ways. Each verification can be processed by the AI model, maintaining a continuous trust score.

The authentication system 200 can further include an adaptive learning module 214 configured to iteratively refine and/or improve the challenge generator and/or the verification module. The authentication system 200 can log successful and failed authentication attempts, feeding this data back into the AI model. Over time, the model can refine its challenge generation and verification processes, adapting to new fraud techniques for example.

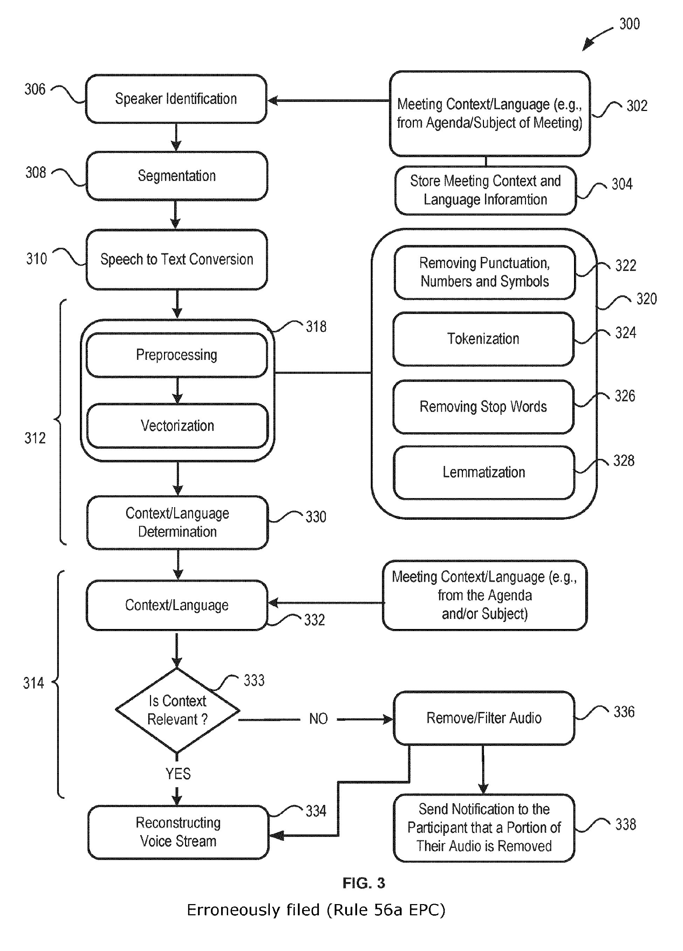

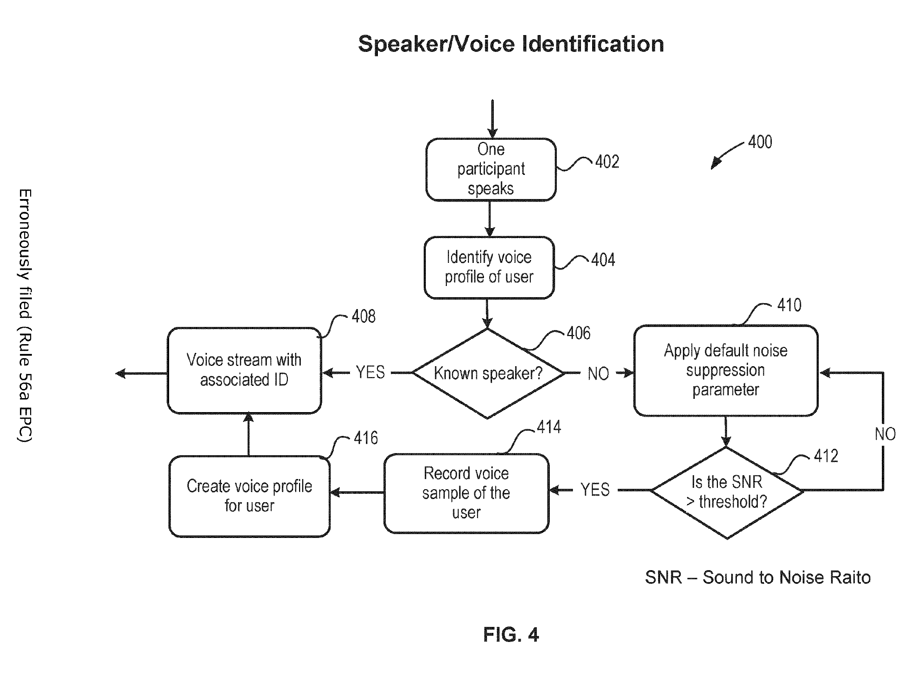

FIG. 3 is a flowchart illustrating a method 300. In various embodiments, the method 300 is an automated computer-implemented process executed by an authentication server (e.g., the authentication system 200 of FIG. 2) for real-time authentication of a user. For ease of description, the method 300 is described below with reference to FIG. 2. The method 300 of the present disclosure, however, is not limited to use of the exemplary authentication system 200 of FIG. 2.

In step 302, the method 300 includes receiving user input at the authentication system 200, for example when a user logs in to his or her account, when a user creates an account, when a user initiates a transaction, when a user makes a listing, and/or when a user opens a program (e.g., an app such as Facebook^{®}, eBay^{®}, Airbnb^{®}, Zoom^{®}, etc.). The authentication system 200 can be utilized as a plugin for an existing program.

In step 304, the method 300 includes receiving an authentication request at the authentication system 200. The authentication request can include user data such as user biometric data. The user biometric data can be received via the biometric input module of the user interface layer 204. The user biometric data can be verified via the biometric verification engine of the data processing layer 202. The authentication system 200 can compare the user data with a user profile database (e.g., the data storage 206) to authenticate the user data. As an example, a user can open an app that contains an authentication system 200 embedded and can be prompted for biometric authentication (e.g., fingerprint or facial recognition). The authentication system 200 can use the device's built-in biometric sensors to capture and verify the user's biometric data. If successful, the user gains access to the app's main interface.

In various embodiments, the authentication request can include a user joining a meeting. In various embodiments, the authentication request can include a consumer attempting to purchase an item online. In various embodiments, the authentication request can include a seller attempting to sell an item online.

In step 306, the method 300 includes a listing creation (e.g., in a scenario where a user is offering an item for sale). Step 306 can additionally or alternatively include a transaction request in various embodiments. The user can upload photos of the item(s), a purchase price, and other details about the item and/or the potential transaction. The authentication system 200 can receive this listing data. The authentication system 200 can use the listing data to authenticate and/or verify the listing data. In this regard, the authentication system 200 can receive one or more images from a user device (e.g., a computer, a smart phone, a tablet, etc.).

In step 308, the method 300 includes location verification. For example, the location verification module of the data processing layer 202 can analyze metadata of audio-visual content to determine whether the geographic location indicated by the metadata matches the location indicated in the listing data and/or the user data.

In an example, upon initiating a high-value transaction or listing creation, the authentication system 200 can activate GPS tracking. The authentication system 200 can request and receive precise location data from the device's GPS module. The location can be cross-referenced with the user's registered address or the transaction's relevant location.

In step 310, the method 300 includes performing a risk assessment of the listing (or transaction). The risk assessment can be performed by the risk assessment module of the data processing layer 202. Risk assessment can include cross-referencing a proposed transaction with known risky transactions. Risk assessment can include cross-referencing the location of the transaction with known risky locations. Risk assessment can take into account the value and/or type of item for sale. Risk assessment can take into account the history of the user (e.g., a positive and/or long history results in a higher trust score).

In step 312, the method 300 includes content analysis. The content analysis engine of the data processing layer 202 can perform content analysis of the user data and/or the listing data. For example, the data processing layer 202 can analyze the content of the audio-visual content, for example by ascertaining what objects, places, people, and/or things are contained in a picture. For example, a user can upload a picture of a an item (e.g., a watch) for sale on their kitchen table, and the data processing layer 202 can recognize the item on top of the kitchen table, together with any other context available (e.g., a coffee mug can be recognized on the kitchen table, a pet can be recognized in the background, a tree in the front yard can be recognized as viewed through a kitchen window, etc.).

In an example, a user can upload audio-visual content (e.g., photos and/or videos) of the item they're selling or property they're listing. The authentication system 200 can analyze these uploads along with transaction details (e.g., value, type) to assess risk level. The multi-modal AI model of the core engine 208 can process this information along with the user's location data. The model can identify elements in the uploaded content (e.g., specific objects, room layouts, distinctive features).

In step 314, the method 300 includes generating a context-specific challenge for the user based on the uploaded content. The dynamic challenge generator of the core engine 208 can be configured to generate the context-specific challenge. A context-specific challenge can be a challenge, such as a request to the user, which takes into account the content recognized in the audio-visual content provided by the user. The authentication system 200 can generate a list of items (e.g., people, objects, buildings, locations, landmarks) recognized and/or detected in the audio-visual content (e.g., an image), for example using the multi-modal model of the core engine 208. The authentication system 200 can generate the context-specific challenge for the user. The context-specific challenge can be based on the list of items detected in the image.

For example, the authentication system 200 can generate a request for the user to retake a picture of the item for sale (similar to the first picture) but from a different angle, or with the coffee mug rotated 180 degrees with continued reference to the above example, among various other requests. The authentication system 200 can generate a request for the user to take a picture of the tree recognized in the background of the first image. The authentication system 200 can generate a request for the user to take a picture of a known landmark, for example if the user is located near the landmark (e.g., "take a picture of yourself in Central Park" for a user who purports to live in Manhattan, New York). The authentication system 200 can generate a request for user to take and send a picture of themself or an item in a recognized location based on the initial audio-visual content provided by the user.

In an example, the first image can be of a vehicle with a house having a porch in background. The authentication system 200 can provide the first image to the multi-modal model with instructions to extract a list of items recognized in the photo and, if possible, identify the items. The authentication system 200 can then generate one or more context-specific challenges based on this list using multi-modal AI model of the core engine 208. The authentication system 200 can randomly select a context-specific challenge from a list of context-specific challenges. The authentication system 200 can generate a random context-specific challenge based on this list using multi-modal AI model of the core engine 208.

In an example, the context-specific challenge can request a live video of the user interacting with a specific item from the uploaded photo(s). In an example, the context-specific challenge can ask the user to show a particular room feature visible in the property photos. In an example, the context-specific challenge can prompt the user to perform a specific action with an item they're selling (e.g., "Please hold the vintage watch next to the red mug visible in the picture").

In step 316, the method 300 includes presenting the context-specific challenge to the user. For example, the user interface layer 204 can send the context-specific challenge for display on the user device (e.g., the PC 102 of FIG. 1). The context-specific challenge can be presented to the user as text on the user's screen requesting the user to complete the context-specific challenge.

In step 318, the method 300 includes receiving the user response from the user device. The user response can be received via the camera interface layer of the user interface layer 204. The user response can confirm completion of the context-specific challenge. The user response can include a second image or other audio-visual content taken as requested by the context-specific challenge.

In step 320, the method 300 includes verifying the user response. The user response can be verified using the multi-modal AI model and/or the response analysis engine of the core engine 208. The second image can be analyzed to determine that the second image satisfies the context-specific challenge. In this regard, the initial prompt provided to the user and the user's response (e.g., a second image) can be provided as an input into the model. For example, if the context-specific challenge requested the user hold the vintage watch next to the red mug visible in the first image, the authentication system 200 can analyze the second image to recognize the items contained therein and confirm that the second image contains the user holding the vintage watch next to the red mug visible in the first image. The authentication system 200 can further analyze metadata of the second image to determine whether it was taken in real-time (i.e., between the time the context-specific challenge was presented and the time the user response was provided) and that it was taken in the correct geographic location (e.g., at the location the user asserts to be located or asserts the item for sale to be located).

The user response can be time sensitive. For example, the user can be required to provide a user response within a predetermined duration. In response to the user providing the response outside of the predetermined duration (e.g., after a predetermined duration), then the authentication system 200 can deny the user response and send a new context-specific challenge with a new time duration for responding.

In an example, the authentication system 200 can present the challenge to the user through the PC 102 (see FIG. 1). The user can respond using the device's camera (e.g., a front camera or a back camera as requested). The authentication system 200 can capture real-time image/video data along with metadata (timestamp, GPS coordinates) to verify the response. If the response fails the verification process, the method 300 can return to step 314.

In various embodiments, the captured user response data can be sent to the server 104 for analysis by the authentication system 200 (e.g., the multi-modal AI model). The model can process the image/video, checking for (i) consistency with the user's biometric data, (ii) presence of required elements from the original uploads, and/or (iii) natural movements and responses that are difficult for deepfakes to replicate. The model can also verify the metadata to ensure the response was generated in real-time and at the correct location (submission might be time gated after the user prompts its start, requiring the user to re-do the submission if it times out).

In step 322, the method 300 includes continuous authentication of the user. For example, while the user is creating a listing or while the user is logged in to the software application or website, the authentication system 200 can send further context-specific challenges that the user must complete. These additional context-specific challenges can be presented at predetermined intervals or at random. The duration between context-specific challenges can depend on the user's trust score (e.g., a high trust score can result in longer durations between challenges and a low trust score can result in shorter durations between challenges). Example, sudden requests throughout the listing creation or transaction process include asking the user to show different angles of the item/property or interact with it in different ways. Each verification can be processed by the AI model, maintaining a continuous trust score.

In step 324, the method 300 includes final authentication of the user (e.g., a listing, a transaction, etc.). The final authentication can be a final step of the continuous authentication model, where the user has satisfied all of the requirements and the system has validated their identity and/or the transaction.

In step 326, the method 300 includes approving the listing (or transaction) of the user. The authentication token generator of the output layer 212 can generate a secure token confirming the user's authenticated status. The authentication system 200 can send the listing approval (or transaction approval) to the application so that the application can proceed with publishing the listing (or realizing the transaction). Once the user response is authenticated, the authentication system 200 can output for display to the user device an authentication confirmation. In various embodiments, the authentication confirmation can include text confirming the authentication. In various embodiments, the authentication confirmation can include a notification that a listing is approved and ready for publication.

In step 328, the method 300 includes publishing the listing (or realizing the transaction).

### Example:

In an example, a user logs into a computer program used for selling items online. The computer program can include a plugin for an authentication system or can be otherwise in communication with the authentication system. The authentication system can be located on a remote server in electronic communication with the user's device via a network (e.g., the Internet). The user enters her login credentials on her user device using biometric input and the authentication system verifies the user's login credentials. The user then goes to create a listing, entering information such as the item for sale, the sale price, location, and other details (e.g., contact information, item condition, etc.). The authentication system receives the listing data and performs a risk analysis. The risk analysis is based on user history, item value, cross-referencing of the location data with the location of the user device as received from the user device GPS module or internet protocol (IP) address information, or any other suitable parameter that can help identify the trustworthiness and/or authenticity of the transaction (e.g., the risk of the transaction being a scam). The authentication system can analyze the listing data (e.g., images, geographic location, etc.) using a multi-modal AI model. The model can identify a list of item (e.g., objects, people, places, landmarks, structures, etc.) in the listing image(s) and generate one or more context-specific challenges that request the user to interact in some way with one or more of the items detected in the first image. The challenge can request that the user send a second image to the authentication system showing the user interacting with the one or more of the items as requested. Upon receiving the second image, the model can analyze the second image to determine whether the challenge was properly performed, in addition to verifying the authenticity of the second image (e.g., deep fake detection, timeliness, proper location, etc.). Upon successfully verifying the second image, the authentication system can generate an authentication token confirming the user's authenticated status to approve the listing. In various embodiments, additional sudden challenges can be presented to the user to provide continuous authentication of the user/listing. The duration between these additional, sudden challenges can be random, can be based on the user's trust score, and/or can depend on the assessed risk level. In this manner, a participant in an online transaction can rest assured of the authenticity of the other participant(s) with whom they may have no prior history.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in *In Re Nuijten* to fall outside the scope of patentable subject matter under 35 U.S.C. § 101.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching may be used throughout the figures to denote different parts but not necessarily to denote the same or different materials.

Methods, systems, and articles are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is intended to invoke 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An automated computer-implemented process executed by an authentication server for real-time authentication of a user, the process comprising:
receiving an authentication request;
receiving user data about the user from a user device;
comparing the user data with a user profile database to authenticate the user data;
receiving a first image from the user device;
providing as input to a multi-modal model the first image and instructions for evaluating the first image;
generating a list of items detected in the first image using the multi-modal model;
generating a context-specific challenge for the user, the context-specific challenge is based on the list of items detected in the first image;
sending the context-specific challenge to the user device with a request for the user to complete the context-specific challenge;
receiving a second image from the user in response to the context-specific challenge;
verifying the second image with the multi-modal model; and
outputting for display to the user device an authentication confirmation.

2. The process of claim 1, wherein the user data includes a biometric data of the user.

3. The process of claim 1, wherein the user data includes a location data of the user.

4. The process of claim 1, wherein generating the context-specific challenge for the user includes generating a list of context-specific challenges and randomly selecting the context-specific challenge from the list of context-specific challenges.

5. The process of claim 1, wherein the context-specific challenge for the user is generated at random intervals.

6. The process of claim 1, wherein the context-specific challenge for the user is generated at intervals, and a duration between intervals is based upon a trust score of the user.

7. The process of claim 1, wherein verifying the second image includes at least one of:
verifying metadata of the second image; or
verifying that a geographic location of the second image matches a location of the user.

8. A computer system that provides real-time authentication of a user, the computer system including one or more processors, one or more data-storage devices, and machine-readable instructions stored in the one or more data-storage devices that when executed using the one or more processors controls the computer system to preform operations comprising:
receiving an authentication request;
receiving user data about the user from a user device;
comparing the user data with a user profile database to authenticate the user data;
receiving a first image from the user device;
providing as input to a multi-modal model the first image and instructions for evaluating the first image;
generating a list of items detected in the first image using the multi-modal model;
generating a context-specific challenge for the user, the context-specific challenge is based on the list of items detected in the first image;
sending the context-specific challenge to the user device with a request for the user to complete the context-specific challenge;
receiving a second image from the user in response to the context-specific challenge;
verifying the second image with the multi-modal model; and
outputting for display to the user device an authentication confirmation.

9. The computer system of claim 8, wherein the user data includes a biometric data of the user.

10. The computer system of claim 8, wherein the user data includes a location data of the user.

11. The computer system of claim 8, wherein generating the context-specific challenge for the user includes generating a list of context-specific challenges and randomly selecting the context-specific challenge from the list of context-specific challenges.

12. The computer system of claim 8, wherein the context-specific challenge for the user is generated at random intervals.

13. The computer system of claim 8, wherein verifying the second image includes verifying metadata of the second image.

14. The computer system of claim 13, wherein verifying the second image includes verifying that a geographic location of the second image matches a location of the user.

15. A non-transitory computer-readable medium encoded with machine-readable instructions that when executed using one or more processors of a computer system control the one or more processors to execute operations comprising:
receiving an authentication request;
receiving user data about a user from a user device;
comparing the user data with a user profile database to authenticate the user data;
receiving a first image from the user device;
providing as input to a multi-modal model the first image and instructions for evaluating the first image;
generating a list of items detected in the first image using the multi-modal model;
generating a context-specific challenge for the user, the context-specific challenge is based on the list of items detected in the first image;
sending the context-specific challenge to the user device with a request for the user to complete the context-specific challenge;
receiving a second image from the user in response to the context-specific challenge;
verifying the second image with the multi-modal model; and
outputting for display to the user device an authentication confirmation.

16. The non-transitory computer-readable medium of claim 15, wherein the user data includes at least one of a biometric data of the user or a location data of the user.

17. The non-transitory computer-readable medium of claim 15, wherein generating the context-specific challenge for the user includes generating a list of context-specific challenges and randomly selecting the context-specific challenge from the list of context-specific challenges.

18. The non-transitory computer-readable medium of claim 15, wherein the context-specific challenge for the user is generated at random intervals.

19. The non-transitory computer-readable medium of claim 15, wherein verifying the second image includes verifying metadata of the second image.

20. The non-transitory computer-readable medium of claim 19, wherein verifying the second image includes verifying that a geographic location of the second image matches a location of the user.
